# EUROPÄISCHE PATENTSCHRIFT

(11) **EP 0 552 669 B1**
(45) Veröffentlichungstag und Bekanntmachung des Hinweises auf die Patenterteilung: **21.06.1995**
(21) Anmeldenummer: 93100495.6
(22) Anmeldetag: 14.01.1993
(51) Int. Cl.: B60R 22/46, B60R 21/26

(54) **Antriebseinheit in einem Rückhaltesystem für Fahrzeuginsassen**
Drive unit in a restraint system for vehicle occupants
Unité d'entraînement dans un système de retenue pour passagers de véhicule

(30) Priorität: 20.01.1992 DE 4201374
(43) Veröffentlichungstag der Anmeldung: 28.07.1993
(73) Patentinhaber: TRW Occupant Restraint Systems GmbH, 73553 Alfdorf (DE)
(72) Erfinder: Föhl, Artur, W-7060 Schorndorf (DE)
(74) Vertreter: Degwert, Hartmut, Dipl.-Phys.

(56) Entgegenhaltungen:
- EP-A- 0 360 902
- DE-A- 2 223 061
- US-A- 4 458 921

## Beschreibung

Die Erfindung betrifft eine Antriebseinheit in einem Rückhaltesystem für Fahrzeuginsassen, mit einem pyrotechnischen Gasgenerator, der in eine Bohrung eines Gehäuses eingesetzt ist und dessen Gasauslaß dem Boden der Bohrung zugewandt ist, und mit einem in dem Gehäuse angeordneten, eine Umlenkung aufweisenden Verbindungskanal zwischen der Bohrung und einem in dem Gehäuse ausgebildeten Raum (EP-A-360 902).

Bei dem Rückhaltesystem handelt es sich beispielsweise um ein Sicherheitsgurtsystem mit Gurtstraffer oder um einen Gassack-Aufprallschutz. Aus konstruktiven Gründen ist oft eine Umlenkung zwischen dem Gasauslaß des Gasgenerators und dem Ort, an welchem die von dem Gasgenerator erzeugten Gase ihre Wirkung entfalten sollen, erforderlich. Bei einem Kolben/Zylinder-Antrieb für Gurtstraffer ist es aus konstruktiven Gründen zweckmäßig, Zylinder und Gasgenerator parallel nebeneinander an einem gemeinsamen Gehäuseblock anzuordnen. Die Verbindung zwischen der Gehäusebohrung, in welche der Gasgenerator eingesetzt ist, und dem Zylinder erfolgt über einen Verbindungskanal, der insgesamt eine 180°-Umlenkung aufweisen muß. Ein solcher Verbindungskanal kann durch drei einander schneidende, zueinander rechtwinklige Bohrungen hergestellt werden. Die Ausbildung des Verbindungskanals aus mehreren einander schneidenden, geradlinigen Bohrungen wurde bisher als zweckmäßig angesehen, weil sie fertigungstechnisch leicht auszuführen ist. Da die drei so entstehenden Kanalabschnitte einen gleichmäßigen Querschnitt aufweisen, wurde keine Veranlassung gesehen, die Gestaltung des Verbindungskanals zu überdenken. Eine ähnliche Anordnung ist aus der US-A-4,458,921 bekannt.

Die Erfindung geht von der Überlegung aus, daß der Vorgang der Gasfreisetzung durch den Gasgenerator ein komplexer dynamischer Vorgang sein muß, da innerhalb von nur 1 bis 2 Millisekunden ein Druck von einigen Hundert Atmosphären erzeugt wird. Es wurde die Möglichkeit in Betracht gezogen, daß die Gase nicht in der erwarteten Weise durch die verschiedenen Kanalabschnitte progressiv weitergeleitet werden, sondern Schwingungen und Stoßwelleneffekte auftreten können, die zu einer verlängerten Verweilzeit der Gase in dem Verbindungskanal führen. Je länger sich die Gase in dem Verbindungskanal aufhalten, desto stärker werden sie abgekühlt. Eine Abkühlung der Gase hat aber eine Verminderung des nutzbaren Drucks zur Folge.

Durch die Erfindung, deren Aufgabe darin besteht, die von einem Gasgenerator erzeugten Druckgase nach ihrer Umlenkung optimal auszunutzen, wird eine praktisch verlustfreie Umlenkung der Druckgase verwirklicht. Dies wird erfindungsgemäß dadurch erreicht, daß die Umlenkung des Verbindungskanals wenigstens teilweise durch eine im Boden der Bohrung angeordnete konkave Ausnehmung gebildet ist, in die ein erster, von dem Gasauslaß des Gasgenerators ausgehender Kanalabschnitt zumindest annähernd tangential einmündet und von der ein zweiter, zu dem Raum im Gehäuse führender Kanalabschnitt zumindest annähernd tangential abgeht. Wenn angenommen wird, daß die vom Gasgenerator erzeugten Gase sich ähnlich wie eine Druckwelle ausbreiten, so treffen die Wellenfronten niemals auf eine Unstetigkeit, an der Reflexion auftreten könnte. Vielmehr werden sie durch die Rundung der konkaven Ausnehmung progressiv umgelenkt und von dem ersten, vorzugsweise gerade ausgebildeten Kanalabschnitt in den zweiten, vorzugsweise ebenfalls geraden Kanalabschnitt überführt. Eine genaue Beschreibung der bei der Umlenkung auftretenden Vorgänge ist mit den zur Verfügung stehenden Meßmethoden nicht möglich. Es wurde jedoch gefunden, daß bei erfindungsgemäßer Ausbildung des Verbindungskanals nach Umlenkung der Gase ein nutzbarer Gasdruck zur Verfügung steht, der nahezu doppelt so hoch ist wie bei Umlenkung durch drei einander rechtwinklig schneidende Kanalabschnitte. Durch die erfindungsgemäße Ausbildung des Verbindungskanals werden Umlenkungsverluste daher nahezu vollständig vermieden.

Weitere Merkmale und Vorteile der Erfindung ergeben sich aus den Unteransprüchen sowie aus der folgenden Beschreibung mehrerer Ausführungsformen anhand der Zeichnung. In der Zeichnung zeigen:
- Fig. 1: einen schematischen Teilschnitt der Antriebseinheit eines Gurtstraffers;
- Fig. 2: eine Schnittansicht entlang Linie II-II in Fig. 1 gemäß einer ersten Ausführungsform;
- Fig. 3: eine zu Fig. 2 analoge Schnittansicht, die jedoch eine abgewandelte Ausführungsform zeigt;
- Fig. 4: eine teils geschnitten gezeigte Perspektivansicht eines Leitstücks bei der Ausführungsform nach Fig. 1 und 2;
- Fig. 5: eine schematische Perspektivansicht des Leitstücks bei der Ausführungsform nach Fig. 3; und
- Fig. 6 bis 10: Abwandlungen der in den Fig. 1 bis 5 gezeigten Ausführungsformen.

Die in der Zeichnung gezeigte Antriebseinheit ist für einen Gurtstraffer mit Kolben/Zylinder-Antrieb bestimmt. Ein blockförmiges Gehäuse 10 weist eine Gewindebohrung 12 auf, in die ein Ende eines Zylinders 14 eingeschraubt ist. In dem Zylinder 14 sitzt ein Kolben 16, an dem ein Zugseil 18 befestigt ist, das aus dem Gehäuse 10 austritt und zum Umfang einer (nicht gezeigten) Seilscheibe an der Seite eines (gleichfalls nicht gezeigten) Gurtaufrollers führt. In eine weitere Bohrung 20 des Gehäuses 10 ist eine Gasgenerator-Patrone 22 eingesetzt. Der Gasauslaß 24 der Gasgenerator-Patrone 22 befindet sich mittig an deren dem Boden der Bohrung 20 zugewandten Ende. Die aus dem Gasauslaß 24 austretenden Gase müssen zu einem kegelförmigen Raum 26 unter dem Kolben 16 umgelenkt und befördert werden. Zu diesem Zweck ist ein Verbindungskanal vorgesehen, der aus einem ersten, geraden, von dem Gasauslaß 24 ausgehenden Kanalabschnitt 30, einem zweiten geraden, in den Raum 26 einmündenden Kanalabschnitt 32 und einem dritten, gekrümmten Kanalabschnitt 34 besteht, der die geraden Kanalabschnitte 30, 32 miteinander verbindet. Der gekrümmte Kanalabschnitt 34 ist durch eine konkave Ausnehmung im Boden der Bohrung 20 gebildet. Der erste Kanalabschnitt 30 läuft annähernd tangential in diese Ausnehmung ein, und der zweite Kanalabschnitt 32 läuft annähernd tangential aus ihrer heraus. Der erste Kanalabschnitt 30 wie auch der erste, aus der Ausnehmung 34 abgehende Teil des Kanalabschnitts 32 ist in einem Leitstück 36 ausgebildet, welches in den zylindrischen Raum zwischen dem Ende der Gasgenerator-Patrone 22 und dem Boden der Bohrung 20 eingesetzt ist. Der erste Kanal 30 verläuft schräg zur Achse des Leitstücks 36 von dessen oberer zu seiner unteren Stirnfläche. Der an die Ausnehmung 34 anschließende Teil des zweiten Kanalabschnitts 32 bildet eine Ausnehmung in der unteren Seitenfläche des Leitstücks 36.

Wie aus der Zeichnung ersichtlich ist, verläuft der Verbindungskanal zwischen dem Gasauslaß 24 und dem Raum 26 keineswegs entlang dem kürzestmöglichen Verbindungsweg. Vielmehr wird durch den ersten Kanalabschnitt 30, der von der Mitte der Gasgenerator-Patrone radial auswärts bis zur konkaven Ausnehmung 34 verläuft, die Wegstrecke erheblich verlängert. Überraschenderweise wurde gefunden, daß diese Verlängerung der Wegstrecke und die dadurch zu befürchtende Abkühlung der Gase unschädlich ist im Vergleich zu den Vorteilen, die sich durch die Vermeidung von Unstetigkeiten auf dem Ausbreitungsweg der Druckgase ergeben. Aufgrund ihrer extrem hohen Ausbreitungsgeschwindigkeit bewegt sich der größe Teil der Gase entlang dem Außenumfang des Verbindungskanals, also entlang der gleichmäßigen Krümmung der Ausnehmung 34. Dort findet eine progressive Umlenkung der Gase statt, so daß Reflexionen vermieden werden.

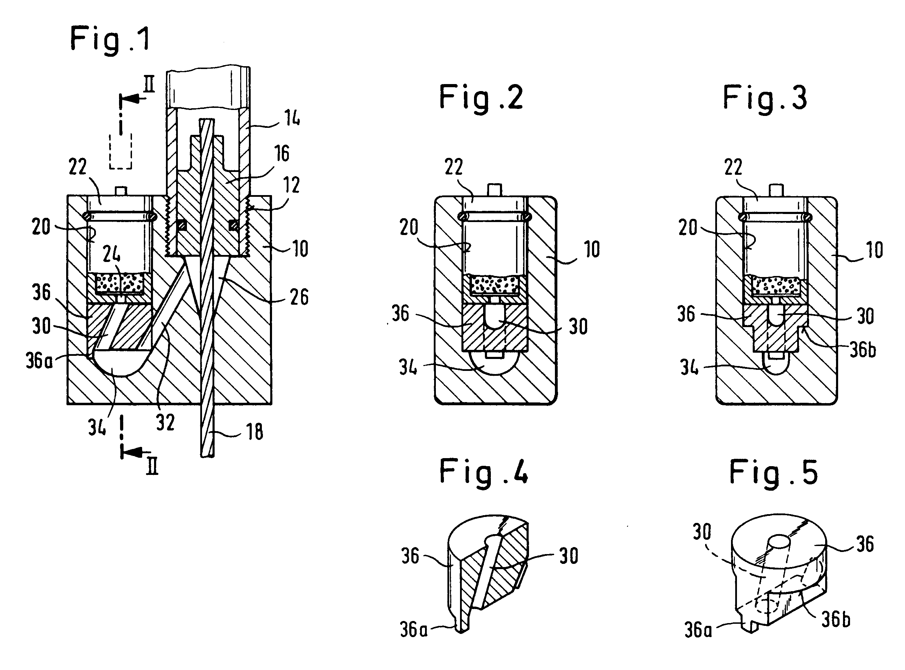

Bei der Ausführungsform nach den Fig. 1 und 2 ist die Ausnehmung 34 kugelkalottenförmig. Um den korrekten Sitz des Leitstücks 36 in der Bohrung 20 zu gewährleisten, ist es mit einer Nase 36a versehen, die in eine passende Aussparung am Boden der Bohrung 20 eingreift.

Bei der Ausführungsform nach den Fig. 3 und 5 ist das Leitstück 36 mit einer Stufe 36b versehen, die auf einer radialen Schulter der Bohrung 20 aufsitzt. Die konkave Ausnehmung 34 am Boden der Bohrung 20 ist teil-ringförmig; die Kanalabschnitte 30, 32 schließen annähernd tangential an die Teil-Ringform der Ausnehmung 34 an.

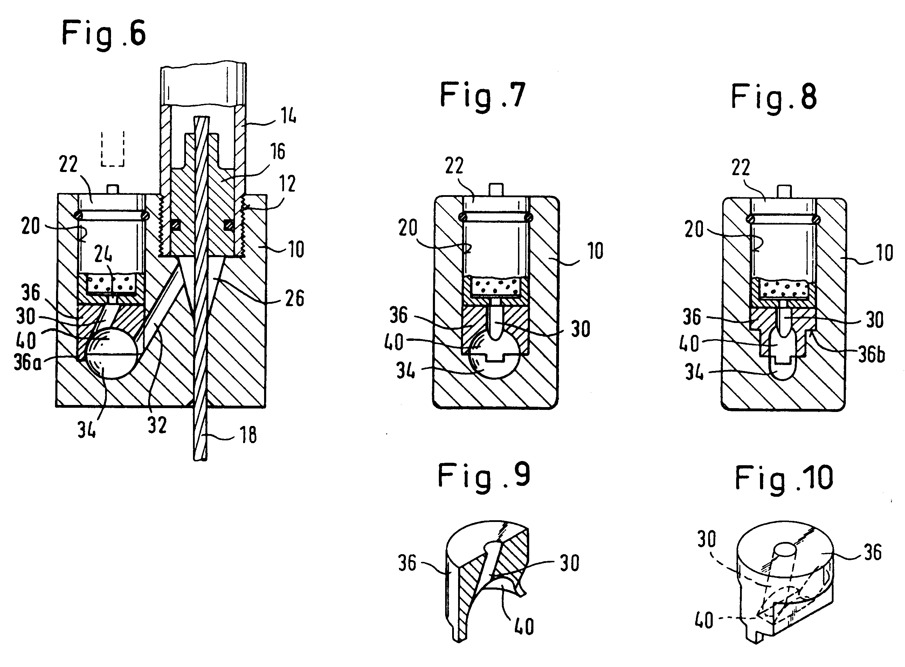

Bei der Ausführungsform nach den Fig. 6, 7 und 9 ist das Leitstück 36 mit einer Ausnehmung 40 versehen, die der Ausnehmung 34 gegenüberliegt und zu dieser symmetrisch ist. Die beiden halbkugelförmigen Ausnehmungen 34, 40 ergänzen einander zu einer Hohlkugel. Die Kanalabschnitte 30, 32 münden annähernd tangential in diese Hohlkugel ein. Die aus dem Kanalabschnitt 30 in die Hohlkugel eintretenden Gase werden zunächst nur unvollständig durch den Kanalabschnitt 32 weiterbefördert. Sie laufen entlang dem Umfang der Hohlkugel weiter und treffen auf die aus dem ersten Kanalabschnitt 30 nachfolgenden Druckgase, werden von diesen mitgenommen und erneut beschleunigt. Dieser Mechanismus führt zu einer kurzen Verweilzeit der Gase an der Umlenkstelle des Verbindungskanals und unterstützt daher die verlustarme Überführung der Gase vom Gasauslaß 24 zu dem Raum 26.

Bei der Ausführungsform nach den Fig. 8 und 10 ist die Ausnehmung 34 halbringförmig und wird durch eine Ausnehmung 40 von gleicher Form am Boden des Leitstücks 36 zu einer Ringform vervollständigt. Die Wirkungsweise ist prinzipiell die gleiche wie bei der Ausführungsform nach den Fig. 6, 7 und 9: Die in dem Ring umlaufenden Gase werden durch die aus dem ersten Kanalabschnitt 30 nachgelieferten Gase beschleunigt und verlustarm über den zweiten Kanalabschnitt 32 in den Raum 26 befördert.

## Patentansprüche

1. Antriebseinheit in einem Rückhaltesystem für Fahrzeuginsassen, mit einem pyrotechnischen Gasgenerator, (22), der in eine Bohrung (20) eines Geäuses (10) eingesetzt ist und dessen Gasauslaß (24) dem Boden der Bohrung (20) zugewandt ist, und mit einem in dem Gehäuse (10) angeordneten, eine Umlenkung aufweisenden Verbindungskanal (30, 32, 34) zwischen der Bohrung (20) und einem in dem Gehäuse (10) ausgebildeten Raum (26), dadurch gekennzeichnet, daß die Umlenkung des Verbindungskanals wenigstens teilweise durch eine im Boden der Bohrung angeordnete konkave Ausnehmung (34) gebildet ist, in die ein erster, von dem Gasauslaß (26) des Gasgenerators (22) ausgehender Kanalabschnitt (30) zumindest annähernd tangential einmündet und von der ein zweiter, zu dem Raum (26) im Gehäuse (10) führender Kanalabschnitt (32) zumindest annähernd tangential abgeht.

2. Antriebseinheit nach Anspruch 1, dadurch gekennzeichnet, daß der erste und der zweite Kanalabschnitt (30, 32) jeweils zumindest annähernd gerade verlaufend ausgebildet sind.

3. Antriebseinheit nach Anspruch 1 oder 2, dadurch gekennzeichnet, daß der Außenumfang der konkaven Ausnehmung (34) zumindest annähernd kreisbogenförmig ist.

4. Antriebseinheit nach Anspruch 3, dadurch gekennzeichnet, daß der Radius des kreisbogenförmigen Außenumfangs der Ausnehmung (34) etwa gleich dem Radius der Bohrung (20) des Gehäuses (10) ist.

5. Antriebseinheit nach einem der vorstehenden Ansprüche, dadurch gekennzeichnet, daß der von dem Gasauslaß (26) des Gasgenerators (22) ausgehende erste Kanalabschnitt (30) in einem Leitstück (36) ausgebildet ist, das am Boden der Bohrung (20) des Gehäuses (10) eingesetzt ist.

6. Antriebseinheit nach Anspruch 5, dadurch gekennzeichnet, daß der unmittelbar an die konkave Ausnehmung (34) anschließende Teil des zweiten Kanalabschnitts (32) gleichfalls in dem Leitstück (36) ausgebildet ist.

7. Antriebseinheit nach einem der vorstehenden Ansprüche, dadurch gekennzeichnet, daß der erste Kanalabschnitt (30) schräg zur Achse der Bohrung (20) des Gehäuses (10) vom Gasauslaß (26) radial auswärts bis in die Nähe der Umfangswandung der Bohrung (20) verläuft.

8. Antriebseinheit nach einem der vorstehenden Ansprüche, dadurch gekennzeichnet, daß die Ausnehmung (34) zumindest annähernd kugelkalottenförmig ist.

9. Antriebseinheit nach Anspruch 8 und einem der Ansprüche 5 bis 7, dadurch gekennzeichnet, daß das Leitstück (36) auf seiner der konkaven Ausnehmung (34) zugewandten Seite gleichfalls eine konkave Ausnehmung (40) von annähernd gleicher Gestalt und Größe aufweist.

10. Antriebseinheit nach einem der Ansprüche 1 bis 7, dadurch gekennzeichnet, daß die Ausnehmung (34, 40) zumindest annähernd den Außenumfang eines kreisringförmigen Umlenkkanalabschnitts begrenzt.

11. Antriebseinheit nach einem der vorstehenden Ansprüche, dadurch gekennzeichnet, daß sie einem Gurtstraffer zugeordnet ist, der einen Kolben/Zylinder-Antrieb mit am Kolben (16) angeschlossenem Zugseil (18) und in dem Gehäuse (10) befestigtem Zylinder (14) aufweist, daß der Zylinder (14) und der Gasgenerator (22) zumindest annähernd parallel zueinander angeordnet sind und daß der erste und der zweite Kanalabschnitt (30, 32) schräg zu den Achsen von Zylinder (14) und Gasgenerator (22) verlaufen.

## Claims

1. A drive unit in a restraining system for vehicle occupants, comprising a pyrotechnical gas generator (22) inserted into a bore (20) of a housing (10) and having a gas outlet (24) which faces the bottom of said bore (20), and a connecting passage (30, 32, 34) being arranged in said housing (10) between said bore (20) and a space (26) formed in said housing (10), wherein said connecting passage has a deflection, characterized in that at least part of the deflection of said connecting passage is formed by a concave recess (34) arranged in the bottom of the bore, wherein a first passage portion (30) originating from the gas outlet (24) of said gas generator (22) opens at least approximately tangentially into said concave recess and wherein a second passage portion (32) leading to said space (26) in said housing (10) branches off said concave recess at least approximately tangentially.

2. The drive unit according to claim 1, wherein said first and second passage portions (30, 32) are each formed to extend at least approximately rectilinearly.

3. The drive unit according to claim 1 or claim 2, wherein said concave recess (34) has an outer periphery which is at least approximately arcuate.

4. The drive unit according to claim 3, wherein said arcuate outer periphery of the recess (34) has a radius which is substantially equal to the radius of said bore (20) of the housing (10).

5. The drive unit according to any one of the preceding claims, wherein said first passage portion (30) originating from the gas outlet (24) of the gas generator (22) is formed in a guide piece (36) which is inserted at the bottom of the the bore (20) of the housing (10).

6. The drive unit according to claim 5, wherein the part of said second passage (32) directly adjoining the concave recess (34) is also formed in said guide piece (36).

7. The drive unit according to any one of the preceding claims, wherein said first passage portion (30) extends inclined to the axis of said bore (20) of the housing (10) from the gas outlet (24) radially outwardly up to the vicinity of the peripheral wall of said bore (20).

8. The drive unit according to any one of the preceding claims, wherein said recess (34) has at least approximately the form of a spherical segment.

9. The drive unit according to claim 8 and any one of claims 5 through 7, wherein said guide piece (36) on its side facing said concave recess (34) likewise has a concave recess (40) of similar shape and size.

10. The drive unit according to any one of claims 1 through 7, wherein said recess (34, 40) at least approximately defines the outer periphery of an annular deflection passage portion.

11. The drive unit according to any one of the preceding claims, wherein said drive unit is associated with a belt pretensioner comprising a piston/cylinder drive having a pulling cable (18) secured to the piston (16) and a cylinder (14) mounted in said housing (10), wherein said cylinder (14) and said gas generator (22) are arranged at least approximately parallel to each other, and wherein said first and second passage portions (30, 32) extend inclined to the axes of said cylinder (14) and said gas generator (22).

## Revendications

1. Unité d'entraînement dans un système de retenue pour passagers de véhicule, comprenant un générateur pyrotechnique de gaz (22) qui est logé dans le perçage (20) d'un boîtier (10) et dont la sortie de gaz (24) est tournée vers le fond du perçage (20), et comprenant, entre le perçage (20) et une chambre (26) ménagée dans le boîtier (10), un canal de liaison (30, 32, 34) qui est pratiqué dans le boîtier (10) et qui comporte une déviation, caractérisée en ce que la déviation du canal de liaison est formée au moins en partie par un évidement concave (34) qui est ménagé dans le fond du perçage, dans lequel débouche, au moins sensiblement tangentiellement, une première portion de canal (30) partant de la sortie de gaz (24) du générateur de gaz (22), et duquel part, au moins sensiblement tangentiellement, une deuxième portion de canal (32) menant à la chambre (26) ménagée dans le boîtier (10).

2. Unité d'entraînement selon la revendication 1, caractérisée en ce que les première et deuxième portions de canal (30, 32) sont chacune au moins sensiblement rectilignes.

3. Unité d'entraînement selon la revendication 1 ou 2, caractérisée en ce que la périphérie extérieure de l'évidement concave (34) est au moins sensiblement en forme d'arc de cercle.

4. Unité d'entraînement selon la revendication 3, caractérisée en ce que le rayon de la périphérie extérieure en forme d'arc de cercle de l'évidement (34) est sensiblement identique au rayon du perçage (20) du boîtier (10).

5. Unité d'entraînement selon l'une des revendications précédentes, caractérisée en ce que la première portion de canal (30) qui part de la sortie de gaz (24) est réalisée dans une pièce de guidage (36) logée dans le fond du perçage (20) du boîtier (10).

6. Unité d'entraînement selon la revendication 5, caractérisée en ce que la partie de la deuxième portion de canal (32) qui se raccorde directement à l'évidement concave (34) est également réalisée dans la pièce de guidage (36).

7. Unité d'entraînement selon l'une des revendications précédentes, caractérisée en ce que la première portion de canal (30) s'étend en biais par rapport à l'axe du perçage (20) du boîtier (10), radialement vers l'extérieur depuis la sortie de gaz (24) jusqu'à proximité de la paroi périphérique du perçage (20).

8. Unité d'entraînement selon l'une des revendications précédentes, caractérisée en ce que l'évidement (34) a au moins sensiblement la forme d'une calotte sphérique.

9. Unité d'entraînement selon la revendication 8 et selon l'une des revendications 5 à 7, caractérisée en ce que, sur son côté tourné vers l'évidement concave (34), la pièce de guidage (36) présente également un évidement concave (40) de forme et de dimension sensiblement identiques.

10. Unité d'entraînement selon l'une des revendications 1 à 7, caractérisée en ce que l'évidement (34, 40) délimite au moins sensiblement la périphérie extérieure d'une portion de canal de déviation de forme annulaire.

11. Unité d'entraînement selon l'une des revendications précédentes, caractérisée en ce qu'elle est associée à un tendeur de ceinture comportant un dispositif d'entraînement à piston-cylindre muni d'un câble de traction (18) relié au piston (16) et d'un cylindre (14) fixé dans le boîtier (10), en ce que le cylindre (14) et le générateur de gaz (22) sont associés l'un à l'autre selon un agencement au moins sensiblement parallèle, et en ce que les première et deuxième portions de canal (30, 32) sont inclinées par rapport à l'axe du cylindre (14) et à celui du générateur de gaz (22).
